# EUROPÄISCHE PATENTSCHRIFT

(11) **EP 4 364 037 B1**
(45) Veröffentlichungstag und Bekanntmachung des Hinweises auf die Patenterteilung: **17.12.2025**
(21) Anmeldenummer: 22740772.3
(22) Anmeldetag: 24.06.2022
(51) Int. Cl.: G06K 19/02, G06K 19/077

(54) **VERFAHREN ZUM HERSTELLEN EINES CHIPKARTENKÖRPERS**
METHOD FOR PRODUCING A CHIP CARD BODY
PROCÉDÉ DE PRODUCTION D'UN CORPS DE CARTE À PUCE

(30) Priorität: 29.06.2021 DE 102021003336
(43) Veröffentlichungstag der Anmeldung: 08.05.2024
(73) Patentinhaber: Giesecke+Devrient ePayments GmbH, 81677 München (DE)
(72) Erfinder: SAUER, Thorsten, 85435 Erding (DE); BALDISCHWEILER, Michael, 81825 München (DE); TARANTINO, Thomas, 83410 Laufen (DE)
(74) Vertreter: Giesecke+Devrient IP
(86) Internationale Anmeldenummer: PCT/EP2022/025290
(87) Internationale Veröffentlichungsnummer: WO 2023/274575

(56) Entgegenhaltungen:
- US-A1- 2017 308 785
- US-A1- 2019 384 261

## Beschreibung

Die vorliegende Erfindung betrifft ein Verfahren zum Herstellen eines Chipkartenkörpers mit einer metallischen Kernschicht für eine kontaktlose oder Dual-Interface Chipkarte sowie ein Verfahren zum Herstellen der Chipkarte.

Eine kontaktlose oder Dual-Interface Chipkarte umfasst einen Kartenkörper, einen Chip und eine mit dem Chip gekoppelte Antennenspule. Die Antennenspule befindet sich entweder in einem Chipmodul, welches den Chip umfasst oder im Kartenkörper. Ein herkömmlicher Kartenkörper ist aus thermoplastischem Material, wie zum Beispiel PVC, PET, PETG oder ABS, hergestellt, die jedoch bisweilen anfällig für Risse und Brüche sind. Beispielsweise kann die Chipkarte in einer Hosentasche durch Torsion brechen.

Im Vergleich zu den herkömmlichen Kartenkörpern weist ein Kartenkörper mit einer metallischen Kernschicht aufgrund ihrer relativ größeren Resistenz gegen Torsion eine erhöhte Lebensdauer auf. Darüber hinaus fühlt sich die metallische Chipkarte im Hinblick auf ihr Gewicht hochwertig und robust an. Durch das Integrieren der metallischen Kernschicht in den Kartenkörper wird die Kontaktlosfunktion der Chipkarte allerdings wesentlich gedämpft, sodass der Schaltabstand zwischen der Chipkarte und einem Kartenlesegerät sinkt. Dies liegt daran, dass das Metallmaterial allgemein elektromagnetische Wellen abschirmt. Denn die von dem Kartenlesegerät an die Chipkarte mittels elektromagnetischer Wellen übertragene Energie wird teilweise von der metallischen Kernschicht absorbiert und reflektiert. Insbesondere wenn die Chipkarte sich in einem wechselnden Magnetfeld des Kartenlesegerätes befindet, bewegen sich Elektronen der metallischen Kernschicht entlang einer Fließrichtung um das Chipmodul herum, sodass ein Wirbelstrom durch die Bewegung der Elektronen entsteht. Durch den entstandenen Wirbelstrom geht einerseits die übertragene Energie als Wärme verloren, was auch als "Absorbieren" bezeichnet wird, und anderseits wird ein Eigenmagnetfeld erzeugt, das einer Änderung des wechselnden Magnetfelds, das es erzeugt hat, entgegenwirkt, was auch als "Reflektieren" bezeichnet wird. Da durch den Wirbelstrom die übertragene Energie mehr oder weniger verloren geht, führt dies dazu, dass die verbleibende Energie, die von dem Chipmodul zur Kontaktloskommunikation tatsächlich genutzt werden kann, entsprechend kleiner ist als die übertragene Energie, d. h. dass der Schaltabstand aufgrund des Wirbelstroms reduziert werden muss. Falls die verbleibende Energie kleiner als ein Schwellenwert, beispielsweise 2 V, ist, welcher für die Schaltung des Chipmoduls entscheidend ist, funktioniert die Chipkarte nicht.

Um dem Dämpfungseinfluss der metallischen Kernschicht zu begegnen, sind verschiedene Herstellungsverfahren bekannt. US 2016/0110639 A1 offenbart eine Chipkarte, welche einerseits ein Chipmodul mit einem Chip und einer Modulantenne und anderseits eine metallische Kartenkörperkernschicht mit einer Kavität zur Aufnahme des Chipmoduls und einem Schlitz umfasst. Der Schlitz überlappt die Modulantenne und erstreckt sich von dem Chipmodul zu einem äußeren Rand der metallischen Kartenkörperkernschicht. Er dient gewissermaßen zur Minderung des oben genannten Dämpfungseinflusses und zur Vergrößerung des gesunkenen Schaltabstandes, indem der Fluss der Elektronen in der metallischen Kartenkörperkernschicht unterbrochen wird. Da der ursprünglich geschlossene Wirbelstromkreis um das Chipmodul zerstört wird und kein Wirbelstrom in der Umgebung des Chipmoduls mehr entstehen kann, wird die für die Funktionalität des Chipmoduls zur Verfügung stehende Energie entsprechend erhöht. Einerseits sollte der Schlitz so weit wie möglich sein, um den Wirbelstrom effektiv zu verhindern, und andererseits sollte der Schlitz im Hinblick auf die mechanische Stabilität der Chipkarte so schmal wie möglich sein. Der Schlitz kann zum Beispiel mittels eines Lasers geschnitten oder chemisch geätzt werden. Um die Stabilität der Chipkarte zu verstärken, kann der Schlitz zumindest teilweise mit einem elektrisch nicht leitenden Polymer, Epoxidharz oder Verstärkungsepoxidharz gefüllt werden. Wichtig ist, dass bei der Herstellung kein Metallmaterial im Schlitz verbleibt. Ein verbleibender Teil des Metallmaterials kann einen Teilschluss oder sogar einen Vollschluss in der durchgängigen Öffnung des Schlitzes verursachen, welcher die Wirksamkeit des Schlitzes entsprechend herabsetzt.

Die metallische Kartenkörperkernschicht wird regelmäßig mit mindestens einer weiteren Deckschicht laminiert. Während des Laminierens entstehen möglicherweise wiederum Verunreinigungen oder ein Teilschluss oder sogar Vollschluss im Schlitz. So kann es vorkommen, dass aufgrund des hohen Drucks ein zunächst sauberer und dünner Schlitz durch Verzug zusammengedrückt wird und einen Kontakt bildet. Solche Chipkarten sind dann nicht funktionsfähig. Aufgrund der vorhandenen Deckschicht ist der Schlitz jedoch zur Überprüfung nicht mehr zugänglich.

Zurzeit wird ein Verfahren zum Herstellen von Chipkartenkörpern mit metallischen Kernschichten für kontaktlose oder Dual-Interface Chipkarten beispielsweise folgendermaßen durchgeführt. Zunächst wird ein metallischer Mehrnutzenbogen für eine Vielzahl von metallischen Kernschichten bereitgestellt. Eine entsprechende Vielzahl von Kavitäten zum Fixieren einer entsprechenden Vielzahl von Chipmodulen und eine Vielzahl von Schlitzen werden im bereitgestellten metallischen Mehrnutzenbogen erzeugt. Der metallische Mehrnutzenbogen kann mit mindestens einer Deckschicht laminiert werden. Letztlich wird die entsprechende Vielzahl von metallischen Kernschichten aus dem metallischen und ggf. auch laminierten Mehrnutzenbogen herausgetrennt.

Weitere Verfahren zum Herstellen eines Chipkartenkörpers sind beispielhaft aus US 2019/384261 A1 oder US 2017/308785 A1 bekannt.

Schwierig wird es, den Chipkartenkörper aus dem Mehrnutzenbogen auszustanzen, wenn der Chipkartenkörper eine metallische Kernschicht mit einer Dicke von mehr als 0,4 mm umfasst. Das bedeutet, dass ein Hybridchipkartenkörper bzw. mehrschichtiger Chipkartenkörper mit einer metallischen Kernschicht, die eine Dicke über 0,4 mm aufweist, oder ein einschichtiger metallischer Chipkartenkörper aus dem metallischen Mehrnutzenbogen ausgefräst werden muss. Beim Ausfräsen kann jedoch ein Teilschluss oder sogar Vollschluss im Schlitz aufgrund der Metallspäne entstehen. Dabei kommt es möglicherweise noch zu Randabplatzungen, Ablösungen des metallischen und ggf. laminierten Mehrnutzenbogens, Verbrennungen der mindestens einen Deckschicht und so weiter. Dies kann dazu führen, dass Chipkartenkörper entsorgt werden müssen, was die Herstellungskosten solcher Chipkarten erhöht.

Aufgabe der vorliegenden Erfindung ist es daher, die Herstellungskosten von kontaktlosen oder Dual-Interface Chipkarten zu senken.

Diese Aufgabe wird durch ein Verfahren zum Herstellen eines Chipkartenkörpers mit metallischer Kernschicht und ein entsprechendes Verfahren zum Herstellen einer Chipkarte mit den Merkmalen der unabhängigen Ansprüche gelöst. Ausgestaltungen und Weiterbildung der Erfindung sind in den abhängigen Ansprüchen angegeben.

Ein erster Aspekt der Erfindung betrifft das Verfahren zum Herstellen eines metallischen Chipkartenkörpers. Gemäß diesem ersten Aspekt der Erfindung beginnt das Verfahren mit dem Bereitstellen des metallischen Mehrnutzenbogens für eine Vielzahl von metallischen Kernschichten. Eine entsprechende Vielzahl von Kavitäten zum Fixieren einer entsprechenden Vielzahl von Chipmodulen darin wird vor oder vorzugsweise gleichzeitig mit dem Heraustrennen der Vielzahl von metallischen Kernschichten aus dem bereitgestellten metallischen Mehrnutzenbogen erzeugt. Anschließend wird mindestens ein Schlitz in einer der Vielzahl der aus dem metallischen Mehrnutzenbogen herausgetrennten metallischen Kernschichten erzeugt.

Ein Grundgedanke der vorliegenden Erfindung besteht somit darin, den mindestens einen Schlitz nicht direkt im metallischen Mehrnutzenbogen, sondern erst in der aus dem metallischen Mehrnutzenbogen herausgetrennten metallischen Kernschicht zu erzeugen. Selbst wenn die metallische Kernschicht mit einer Dicke über 0,4 mm aus dem metallischen Mehrnutzenbogen ausgefräst werden muss, bilden sich keine Metallspäne im Schlitz, da der Schlitz erst nach dem Ausfräsen erzeugt wird und somit die Möglichkeit des Verbleibs von Metallspänen beim Ausfräsen vollständig ausgeschlossen werden kann. Es kommt folglich zu weniger Ausschuss, sodass die Herstellungskosten entsprechend sinken.

Das Verfahren gemäß dem ersten Aspekt weist gegenüber dem oben genannten aktuellen Verfahren den weiteren Vorteil auf, dass ein notwendiger Kontrollschritt zum Entfernen der Metallspäne im Schlitz eingespart werden kann.

Die Kavitäten, der mindestens eine Schlitz sowie die metallischen Kernschichten können jeweils mittels eines Lasers oder Wasserstrahlschneiden, bevorzugt in einem gemeinsamen Laserarbeitsgang, erzeugt werden, um die Herstellungszeit zu reduzieren. Alternativ können die Kavitäten und die metallischen Kernschichten ausgestanzt werden, vorzugsweise gleichzeitig in einem Ausstanzarbeitsgang. Das ermöglicht es, mit bestehenden Stanzmaschinen, deren Stanzköpfe lediglich so angepasst werden müssen, dass die Kavitäten und die metallischen Kernschichten gleichzeitig ausgestanzt werden können, zu arbeiten. Alternativ kann der mindestens eine Schlitz auch chemisch geätzt werden.

Der mindestens eine Schlitz kann sich von der Kavität bis zu einem Rand der aus dem metallischen Mehrnutzenbogen herausgetrennten metallischen Kernschicht erstrecken. Er sollte mit einer Breite zwischen 30 µm und 100 µm, bevorzugt zwischen 50 µm und 80 µm, erzeugt werden, um einen optimalen Kompromiss zwischen dem effektiven Verhindern von Wirbelströmen in der Umgebung der Kavität und der mechanischen Stabilität des Chipkartenkörpers zu erzielen. Im Anschluss kann der mindestens eine Schlitz zumindest teilweise mit einem elektrisch nicht leitenden Material, z. B. Polymer, Epoxidharz oder Verstärkungsepoxidharz gefüllt werden, um die mechanische Stabilität des metallischen Chipkartenkörpers zu verstärken.

Ein zweiter Aspekt der Erfindung betrifft das Verfahren zum Herstellen eines Hybridchipkartenkörpers mit der metallischen Kernschicht und mindestens einer Deckschicht. Gemäß diesem zweiten Aspekt der Erfindung beginnt das Verfahren mit dem Bereitstellen der mindestens einen Deckschicht, welche zum Beispiel eine transparente Deckschicht und/ oder eine Schicht mit gedrucktem Muster und/oder eine beliebige andere Schicht sein kann. Sie kann insbesondere Sicherheitsmerkmale aufweisen. Anschließend wird die mindestens eine Deckschicht mit der herausgetrennten metallischen Kernschicht laminiert. Vor oder vorzugsweise nach der Laminierung kann mindestens eine durchgängige Chipmodulöffnung in der mindestens einen Deckschicht zum Fixieren des Chipmoduls erzeugt werden.

Die mindestens eine Deckschicht kann ebenfalls aus einem Mehrnutzenbogen für eine Vielzahl von Deckschichten herausgetrennt werden, z. B. durch Ausstanzen. Zuvor wird der Mehrnutzenbogen für die Vielzahl von Deckschichten vorzugsweise bei angemessener Temperatur und angemessenem Druck über einen ausreichenden Zeitraum so prelaminiert, dass keine Schrumpfung der aus dem Mehrnutzenbogen herausgetrennten mindestens einen Deckschicht bei dem nachfolgenden Schritt des Laminierens der mindestens einen Deckschicht mit der metallischen Kernschicht entsteht. Mit anderen Worten wird die mindestens eine Deckschicht, welche in der Regel eine polymere Schicht ist, unter Druck und Temperatur relaxiert, solange sie noch Teil des Mehrnutzenbogens für die Vielzahl von Deckschichten ist, und die mindestens eine relaxierte bzw. prelaminierte Deckschicht wird dann aus dem Mehrnutzenbogen herausgetrennt. Soweit erforderlich wird eine Kleberschicht entweder auf einer Seite der mindestens einen Deckschicht oder auf einer Seite der metallischen Kernschicht z. B. durch Siebdurch, Aufrakeln oder Aufsprühen aufgebracht, mit der die entsprechende andere Schicht laminiert wird.

Anschließend können die metallische Kernschicht und die mindestens eine Deckschicht in einen Halterahmen zum Haltern des Chipkartenkörpers eingelegt werden, z. B. ein oder zwei Deckschichten oberhalb und/oder unterhalb der metallischen Kernschicht. Der Halterahmen kann eine einzige oder eine Vielzahl von Rahmeneinheiten umfassen, und in jede Rahmeneinheit kann ein einziger Chipkartenkörper eingelegt werden. Vorzugweise weist der Halterahmen die gleiche Vielzahl von Rahmeneinheiten wie die Vielzahl von metallischen Kernschichten des metallischen Mehrnutzenbogens und/oder die Vielzahl von Deckschichten des Mehrnutzenbogens auf. Darüber hinaus kann die Rahmeneinheit gleich groß sein wie der Chipkartenkörper, und sie sollte keine Haftung und/oder Bindung zum Chipkartenkörper eingehen. Dafür ist z. B. ein Silikonrahmen oder ein Teflonrahmen geeignet.

Sollte die mindestens eine Deckschicht auf der Seite der metallischen Kernschicht eingelegt werden, auf welcher sich die Kavität der metallischen Kernschicht befindet, kann eine Einlage, z. B. eine PVC- oder Tefloneinlage oder ein vergleichbares Füllmittel in der Kavität der metallischen Kernschicht platziert werden, oder ein geeignetes Füllmaterial dispensiert werden um einen Einfall der mindestens einen Deckschicht im Bereich der Kavität beim Laminieren zu vermeiden. Das Füllmittel kann gleichzeitig mit dem Aufbringen der Kleberschicht in die Kavität eingebracht werden. Die Einlage oder das Füllmittel sind vorzugsweise gleich groß oder geringfügig kleiner wie die Kavität der metallischen Kernschicht. Gleichermaßen kann ein elektrisch nicht leitendes Material, z. B. Polymer, Epoxidharz oder Verstärkungsepoxidharz, in den mindestens einen Schlitz der metallischen Kernschicht zumindest teilweise gefüllt werden, um die mechanische Stabilität des Hybridchipkartenkörpers zu verstärken. Alternativ kann eine Einlage aus dem elektrisch nicht leitenden Material in den mindestens einen Schlitz der metallischen Kernschicht eingebracht werden.

Nach dem Einlegen der metallischen Kernschicht und der mindestens einen Deckschicht in die Rahmeneinheit kann ein entsprechendes Laminierblech, das zum Zusammendrücken der metallischen Kernschicht und der mindestens einen Deckschicht dient, den Halterahmen so abdecken, dass keine Luft zwischen der metallischen Kernschicht und der mindestens einen Deckschicht verbleibt. Denn die Luft kann Unebenheiten beim Laminieren verursachen. Außerdem sollte das Laminierblech, genau wie der Halterahmen, keine Haftung und/oder Bindung zum Chipkartenkörper eingehen.

Die durchgängige Chipmodulöffnung kann in der mindestens einen Deckschicht zum späteren Fixieren des Chipmoduls noch vor dem Laminieren erzeugt werden. In diesem Fall kann das Laminierblech einen Aufsatz umfassen, der sich beim Abdecken des Halterahmens in die durchgängige Chipmodulöffnung der mindestens einen Deckschicht erstreckt. Mittels dieses Aufsatzes lässt sich verhindern, dass sich die durchgängige Chipmodulöffnung beim Laminieren verzieht. Alternativ kann die durchgängige Chipmodulöffnung erst nach dem Laminieren und vor dem Fixieren des Chipmoduls erzeugt werden, z. B. durch Ausfräsen.

Bei dem Hybridchipkartenkörper mit metallischer Kernschicht und mindestens einer damit laminierten Deckschicht ist das Verfahren gemäß dem zweiten Aspekt der Erfindung besonders vorteilhaft gegenüber Herstellungsverfahren, bei denen die Schlitze im metallischen Mehrnutzenbogen erzeugt werden und der metallische Mehrnutzenbogen insgesamt mit einer großflächigen Deckschicht laminiert wird. Denn bei solchen Verfahren ist es aufgrund der mit dem metallischen Mehrnutzenbogen laminierten Deckschicht kaum möglich, beim Laminieren entstandene Kontaktbrücken innerhalb der Schlitze zu identifizieren.

Ein dritter Aspekt der Erfindung betrifft die Herstellung der kontaktlosen oder Dual-Interface Chipkarte unter Verwendung des Herstellungsverfahrens gemäß entweder dem ersten Aspekt der Erfindung oder dem zweiten Aspekt der Erfindung. Das Verfahren beginnt mit dem Bereitstellen eines Chipmoduls mit einem Chip, vorzugsweise einem RFID- oder einem NFC Chip, und einer mit dem Chip gekoppelten Antennenspule, vorzugsweise einer induktiv koppelnden Antennenspule mit mindestens einer Windung. Das bereitgestellte Chipmodul wird in der Kavität der metallischen Kernschicht und ggf. in der durchgängigen Chipmodulöffnung der mindestens einen Deckschicht z. B. mittels eines Klebers fixiert. Wenn die Kavität der metallischen Kernschicht noch durch die vorgenannte Einlage oder das Füllmittel belegt ist, kann dies vor dem Fixieren des Chipmoduls entfernt werden.

Die vorliegende Erfindung wird nachfolgend mit Bezug auf die beiliegenden Zeichnungen beispielhaft beschrieben, wobei die Darstellungen rein schematisch sind. Darin zeigen:
Figur 1A eine Draufsicht eines metallischen Mehrnutzenbogens 10 für eine Vielzahl von metallischen Kernschichten 15;
Figur 1B die Draufsicht des metallischen Mehrnutzenbogens 10 für die Vielzahl von metallischen Kernschichten 15 gemäß Figur 1A, bei der jede metallische Kernschicht 15 eine Kavität 20 aufweist;
Figur 1C eine Draufsicht einer aus dem metallischen Mehrnutzenbogen 10 gemäß Figur 1A oder Figur 1B herausgetrennten metallischen Kernschicht 15, welche die Kavität 20 und einen Schlitz 25 aufweist;
Figur 1D eine Draufsicht der metallischen Kernschicht 15 gemäß Figur 1C, welche eine zweite Kavität 30 aufweist;
Figur 2 eine Draufsicht eines prelaminierten Mehrnutzenbogens 35 für eine Vielzahl von Deckschichten 40;
Figur 3 eine Explosionsdarstellung der Komponenten zur Herstellung eines Chipkartenkörpers 100 mit der metallischen Kernschicht 15 gemäß Figur 1C und zwei aus dem Mehrnutzenbogen 35 gemäß Figur 2 herausgetrennten Deckschichten 40 sowie zwei Einlagen 45, 55;
Figur 4 eine Querschnittsansicht des in einem Halterahmen 70 positionierten Chipkartenkörpers 100 gemäß Figur 3 sowie eines Laminierblechs 60;
Figur 5 eine perspektivische Ansicht des Halterahmens 70 gemäß Figur 4 mit einer Vielzahl von Rahmeneinheiten 80 zum Haltern der entsprechenden Vielzahl von Chipkartenkörpern 100 gemäß Figuren 3 und 4;
Figur 6 eine Querschnittsansicht einer rein metallischen Dual-Interface Chipkarte 150;
Figur 7 eine Querschnittsansicht einer mehrschichtigen kontaktlosen oder Dual-Interface Chipkarte 250 mit dem Chipkartenkörper 100 gemäß Figuren 3 und 4 und einem Chipmodul 90; und
Figur 8 eine Querschnittsansicht einer mehrschichtigen kontaktlosen oder Dual-Interface Chipkarte 350 mit der metallischen Kernschicht 15 gemäß Figur 1C und vier Deckschichten 40 gemäß Figur 2.

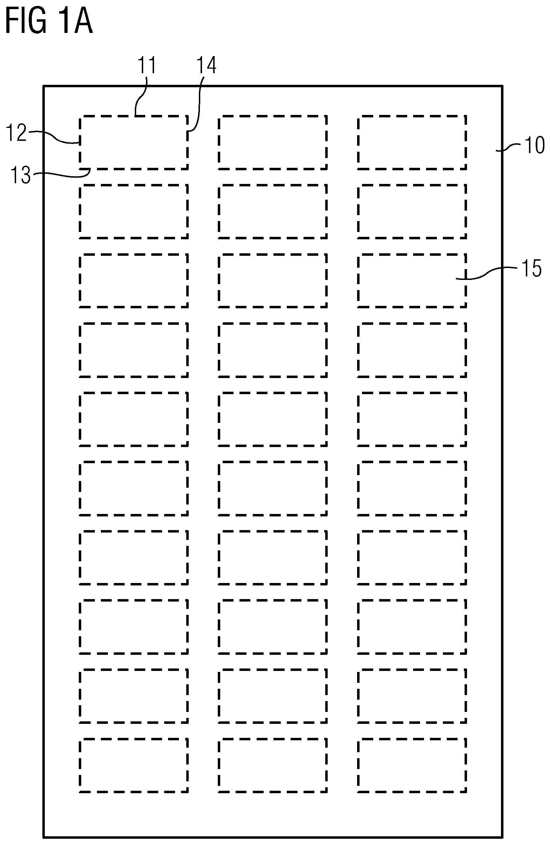

Figur 1A zeigt die Draufsicht eines metallischen Mehrnutzenbogens 10 für eine Vielzahl von metallischen Kernschichten 15 von gleicher Größe. Der metallische Mehrnutzenbogen 10 weist eine Vielzahl von Schnittlinien 11, 12, 13, 14 auf, entlang der die metallischen Kernschichten 15 aus dem metallischen Mehrnutzenbogen 10 in einem weiteren Schritt herausgetrennt werden können. Die Schnittlinien 11, 12, 13, 14 können sichtbare und/oder virtuelle Linien sein. Die Dicke des metallischen Mehrnutzenbogens 10 sollte die maximale Dicke eines Chipkartenkörpers gemäß ISO 7810 nicht übersteigen. Abweichend von Figur 1A sind die Gesamtzahl der metallischen Kernschichten 15 und/oder die Anzahl der metallischen Kernschichten 15 je Zeile und Spalte des metallischen Mehrnutzenbogens 10 je nach Bedarf veränderbar.

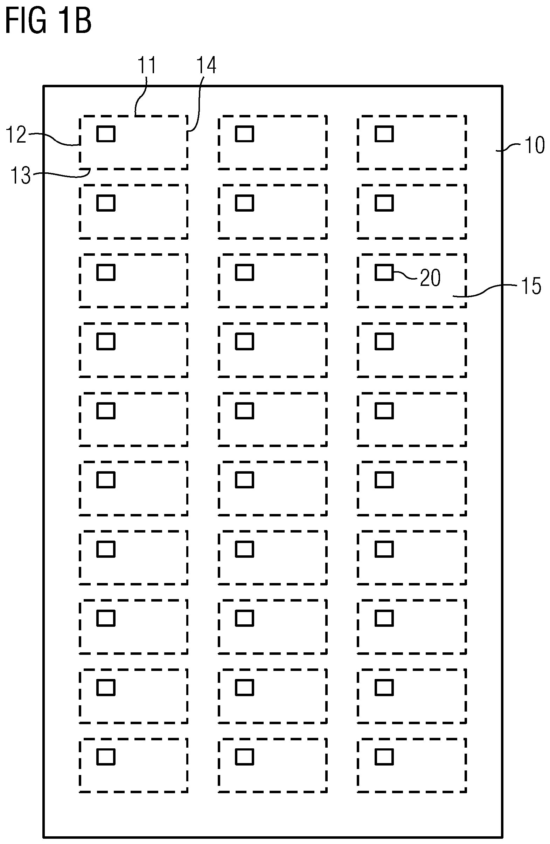

Figur 1B zeigt die Draufsicht des metallischen Mehrnutzenbogens 10 gemäß Figur 1A, wobei jede der metallischen Kernschichten 15 des Mehrnutzenbogens 10 eine Kavität 20 zum Fixieren eines Chipmoduls 90 aufweist. Die Kavitäten 20 können direkt im Mehrnutzenbogen 10 vor oder nach oder vorzugsweise gleichzeitig mit dem Heraustrennen der Vielzahl von metallischen Kernschichten 15 aus dem Mehrnutzenbogen 10 erzeugt werden, z. B. in einem Ausstanzarbeitsgang ausgestanzt oder in einem Ausfräsarbeitsgang ausgefräst oder mit Wasserstrahlverfahren oder in einem Laserarbeitsgang gelasert werden.

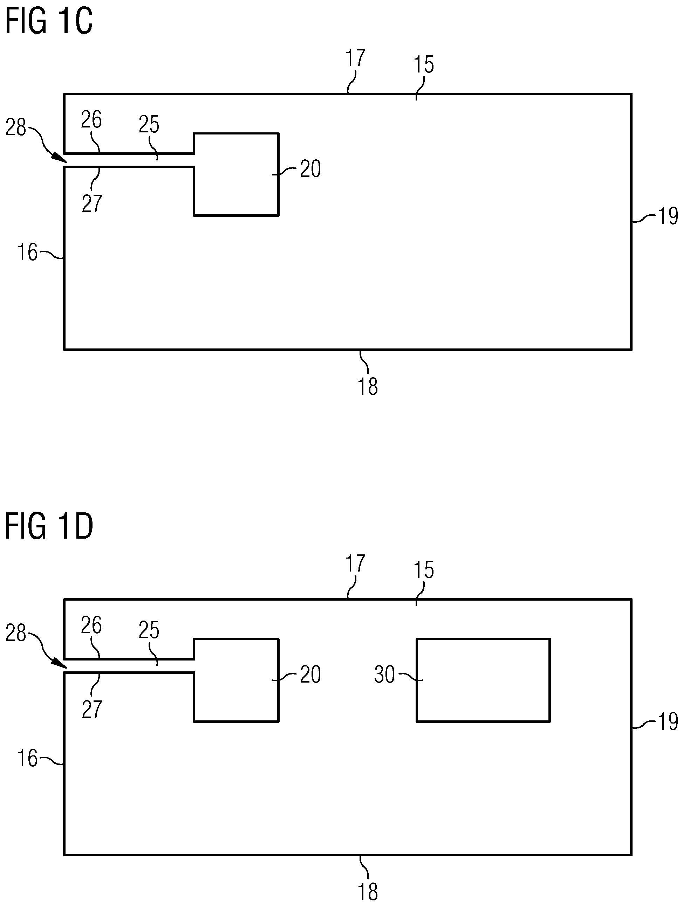

Figur 1C zeigt die Draufsicht einer aus dem metallischen Mehrnutzenbogen 10 gemäß Figur 1A oder Figur 1B herausgetrennten metallischen Kernschicht 15, welche die Kavität 20 zum Fixieren des Chipmoduls 90 und einen Schlitz 25 aufweist. Der Schlitz 25 wird erst in der aus dem metallischen Mehrnutzenbogen 10 herausgetrennten metallischen Kernschicht 15 erzeugt, und zwar so dass er sich von der Kavität 20 bis zu einem Rand 16 der metallischen Kernschicht 15 erstreckt. Insbesondere weist er über seine gesamte Länge eine durchgängige Öffnung 28 auf, in welcher sich die beiden Wände 26, 27 des Schlitzes 25 nicht kontaktieren. Alternativ kann sich der Schlitz 25 von der Kavität 20 bis zu einem der anderen drei Ränder 17, 18, 19 der metallischen Kernschicht 15 erstrecken. Abweichend von Figur 1C sind Länge, Tiefe, Breite, Form, Richtung des Schlitzes 25 und Winkellage zwischen dem Schlitz 25 und einem Rand 16, 17, 18, 19 der metallischen Kernschicht 15 sowie die Anzahl von Schlitzen 25 je nach Bedarf veränderbar.

Figur 1D zeigt die Draufsicht der metallischen Kernschicht 15 gemäß Figur 1C, welche neben der Kavität 20 zum Fixieren des Chipmoduls 90 und dem Schlitz 25 noch eine zweite Kavität 30 aufweist, beispielsweise zum Fixieren eines Displays zur Präsentation von Informationen des Chipmoduls 90 und/oder eines Chipkartenlesegerätes. Die zweite Kavität 30 zum Fixieren des Displays kann vor oder nach oder vorzugsweise gleichzeitig mit dem Erzeugen der Kavität 20 zum Fixieren des Chipmoduls 90 erzeugt werden. Abweichend von Figur 1D sind Länge, Breite, Tiefe und Position der zweiten Kavität 30 je nach Bedarf veränderbar.

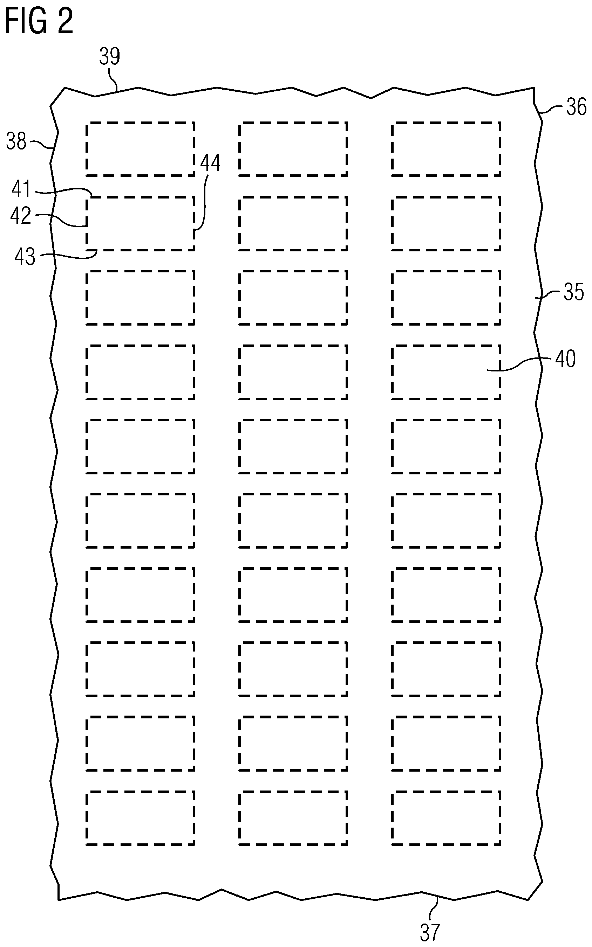

Figur 2 zeigt in Draufsicht einen bereits prelaminierten Mehrnutzenbogen 35 zur Herstellung einer Vielzahl von Deckschichten 40 von gleicher Größe. Der Mehrnutzenbogen 35 kann vor dem Prelaminieren gleich groß wie oder vorzugsweise geringfügig größer als der metallische Mehrnutzenbogen 10 gemäß Figuren 1A und 1B sein, um beim Prelaminieren unter Druck und/oder Temperatur entstandene Schrumpfung von Rändern 36, 37, 38, 39 des Mehrnutzenbogens 35 auszugleichen. Eine Vielzahl von Schnittlinien 41, 42, 43, 44 des Mehrnutzenbogens 35, entlang der die Deckschichten 40 aus dem Mehrnutzenbogen 35 herausgetrennt werden, kann durch sichtbare und/oder virtuelle Linien gebildet sein und die herausgetrennten Deckschichten 40 sollten gleich groß sein wie die aus dem metallischen Mehrnutzenbogen 10 herausgetrennten metallischen Kernschichten 15 gemäß Figuren 1C und 1D. Der Deckschichten-Mehrnutzenbogen 35 kann zum Beispiel ein transparenter Mehrnutzenbogen und/oder ein Mehrnutzenbogen mit gedrucktem Muster und/oder ein beliebiger anderer Mehrnutzenbogen sein. Er kann insbesondere Sicherheitsmerkmale aufweisen.

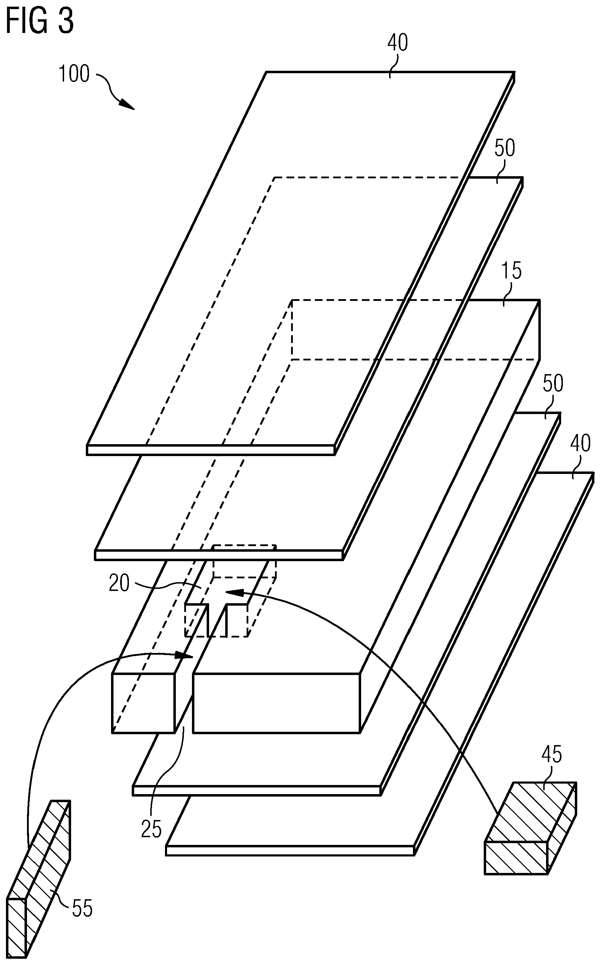

Figur 3 zeigt eine Explosionsdarstellung der Komponenten zur Herstellung eines Chipkartenkörpers 100 mit der metallischen Kernschicht 15 gemäß Figur 1C, und einer von oben sowie einer von unten mit der metallischen Kernschicht zu laminierenden Deckschichten 40 gemäß Figur 2. Ebenfalls zeigt Figur 3 eine vor dem Laminieren der metallischen Kernschicht 15 mit den Deckschichten 40 in die Kavität 20 der metallischen Kernschicht 15 einzulegende Einlage 45, z. B. eine PVC- oder Tefloneinlage, und eine vor dem Laminieren der metallischen Kernschicht 15 mit den Deckschichten 40 in den mindestens einen Schlitz 25 der metallischen Kernschicht 15 einzulegende Einlage 55 bestehend aus elektrisch nicht leitendem Material, z. B. Polymer, Epoxidharz oder Verstärkungsepoxidharz. Die Einlagen 45, 55 für die Kavität 20 und den Schlitz 25 der metallischen Kernschicht 15 sind vorzugsweise gleich groß wie die Kavität 20 und der Schlitz 25 der metallischen Kernschicht 15, und dienen zum Vermeiden des Einfallens der oberen und der unteren Deckschicht 40 in die Kavität 20 der metallischen Kernschicht 15 während des Laminierens. Abweichend von Figur 3 können die Kavität 20 und der Schlitz 25 der metallischen Kernschicht 15 mit Füllmaterial aufgefüllt werden. Auf einer oder beiden Seiten der metallischen Kernschicht 15 und/oder auf einer unteren Seite der oberen Deckschicht 40 und/oder auf einer oberen Seite der unteren Deckschicht 40 kann mindestens eine Kleberschicht 50 z. B. durch Siebdruck, Aufsprühen oder Aufrakeln aufgebracht werden. Alternativ kann die mindestens eine Kleberschicht 50 direkt auf dem metallischen Mehrnutzenbogen 10 und/oder dem Deckschichten-Mehrnutzenbogen 35 aufgebracht werden.

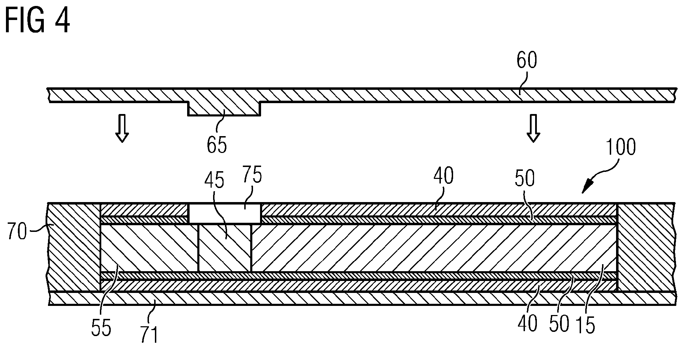

Figur 4 zeigt eine Querschnittsansicht des in eine Rahmeneinheit 80 eines hier nicht dargestellten größeren Halterahmens 70 platzierten Chipkartenkörpers 100 gemäß Figur 3. Die Rahmeneinheit 80, z. B. ein Silikonrahmen oder ein Teflonrahmen, kann den Chipkartenkörper 100 beim Laminieren haltern und kann gleich groß wie der Chipkartenkörper 100 sein. Ebenfalls zeigt Figur 4 das Laminierblech 60, welches beim Laminieren den Halterahmen 70 abdeckt. Zunächst wird eine der beiden Deckschichten 40 auf dem Boden 71 der Rahmeneinheit 80 abgelegt, und danach wird die metallische Kernschicht 15 auf die Deckschicht 40 gelegt. Anschließend werden die zwei vorgenannten Einlagen 45, 55 gemäß Figur 3 in die Kavität 20 und in den Schlitz 25 der metallischen Kernschicht 15 eingelegt, und schließlich wird die andere Deckschicht 40 auf die metallische Kernschicht 15 gelegt. Die obere Deckschicht 40, die sich auf der Seite der Kavität 20 der metallischen Kernschicht 15 befindet, kann eine durchgängige Chipmodulöffnung 75 zum späteren Fixieren des Chipmoduls 90 aufweisen. Diese durchgängige Chipmodulöffnung 75 kann vor dem Laminieren direkt in der oberen Deckschicht 40 oder vorzugsweise gleichzeitig mit dem Heraustrennen der Vielzahl von Deckschichten 40 aus dem Deckschichten-Mehrnutzenbogen 35 gemäß Figur 2 in einem Ausstanzarbeitsgang ausgestanzt werden. Das Laminierblech 60 kann dafür einen Aufsatz 65 aufweisen, der sich beim Abdecken des Halterahmens 70 in die durchgängige Chipmodulöffnung 75 der oberen Deckschicht 40 erstreckt. Alternativ kann sich der Aufsatz 65 des Laminierblechs 60 beim Abdecken des Halterahmens 70 nicht nur in die durchgängige Chipmodulöffnung 75 der oberen Deckschicht 40 sondern auch in die Kavität 20 der metallischen Kernschicht 15 erstrecken. In diesem Fall wird die Einlage 45 für die Kavität 20 gemäß Figur 3 nicht in die Kavität 20 eingelegt. Abweichend von Figur 4 kann die durchgängige Chipmodulöffnung 75 der oberen Deckschicht 40 erst nach dem Laminieren und vor dem Fixieren des Chipmoduls 90 erzeugt werden, und in diesem Falle wird der Aufsatz 65 des Laminierblechs 60 nicht benötigt. Nach dem Abdecken des Halterahmens 70 mittels des Laminierblechs 60 wird die metallische Kernschicht 15 mit den Deckschichten 40 mittels der Kleberschichten 50 unter Druck und/ oder Temperatur laminiert.

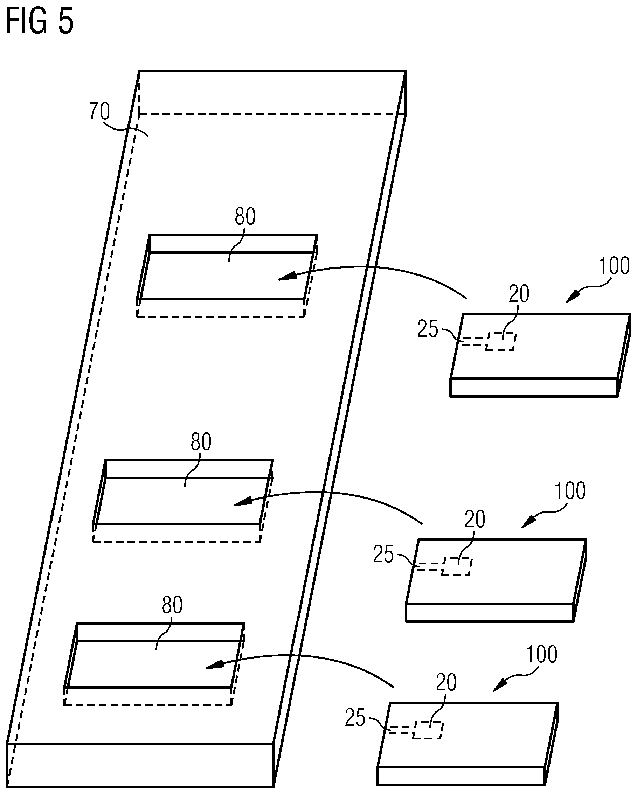

Figur 5 zeigt eine perspektivische Ansicht des Halterahmens 70 mit einer entsprechenden Vielzahl von Rahmeneinheiten 80 gemäß Figur 4 zum Haltern der entsprechenden Vielzahl von Chipkartenkörpern 100 gemäß Figuren 3 und 4. In jede Rahmeneinheit 80 des Halterahmens 70 wird ein einziger Chipkartenkörper 100 eingelegt. Die Rahmeneinheit 80 ist gleich groß wie der Chipkartenkörper 100 und geht keine Haftung und/oder Bindung zum Chipkartenkörper 100 ein. Der Halterahmen 70 und die in den Rahmeneinheiten 80 des Halterahmens 70 positionierten Chipkartenkörper 100 sowie das Laminierblech 60 gemäß Figur 4 können als Ganzes in einen Laminator eingelegt werden. Nach dem Laminieren werden die Chipkartenkörper 100 nach dem Entfernen des Laminierblechs 60 aus den Rahmeneinheiten 80 des Halterahmens 70 entnommen. Abweichend von Figur 5 sind die Gesamtzahl der Rahmeneinheiten 80 und die Anzahl der Rahmeneinheiten 80 je Zeile und Spalte des Halterahmens 70 je nach Bedarf veränderbar.

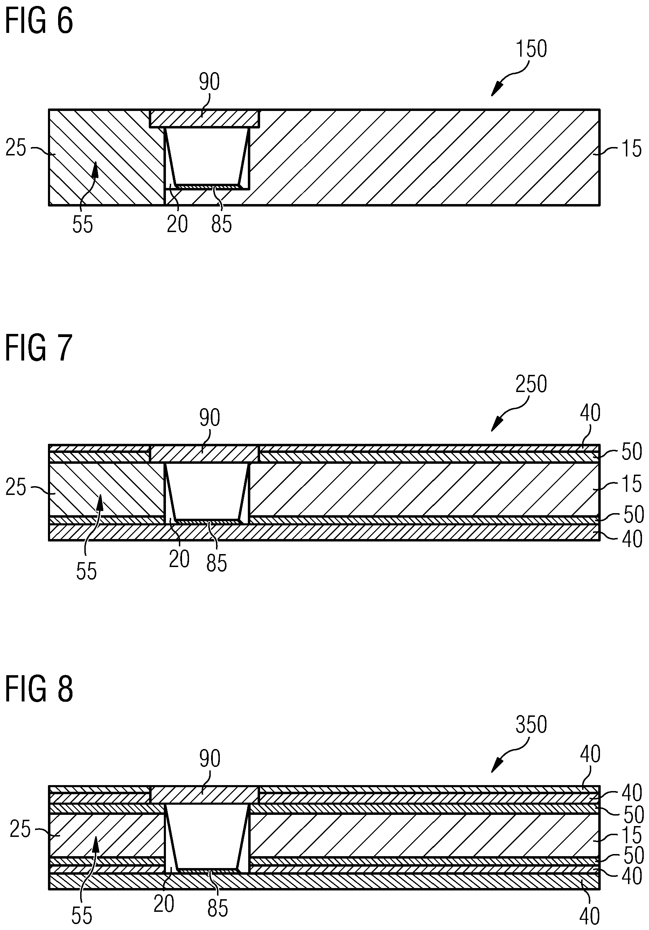

Figur 6 zeigt eine Querschnittsansicht einer Dual-Interface Chipkarte 150 umfassend die metallische Kernschicht 15 gemäß Figur 1C und einem in der Kavität 20 der metallischen Kernschicht 15 z. B. mittels eines Klebers 85 fixierten Chipmodul 90. Das Chipmodul 90 umfasst einen Chip, vorzugsweise einen RFID- oder einen NFC Chip, und eine mit dem Chip gekoppelte Antennenspule, vorzugsweise eine induktiv koppelnde Antennenspule mit mindestens einer Windung. In dem Schlitz 25 der metallischen Kernschicht 15 kann die Einlage 55 oder das Füllmittel gemäß Figur 3 eingebracht werden. Sicherheitsmerkmale und/oder Muster können in oder auf dem metallischen Mehrnutzenbogen 10 gemäß Figuren 1A und 1B oder in oder auf der metallischen Kernschicht 15 gedruckt und/oder gelasert und/oder geklebt und/oder geprägt werden.

Figur 7 zeigt eine Querschnittsansicht einer kontaktlosen oder Dual-Interface Chipkarte 250 ähnlich zu Figur 6, jedoch mit dem Chipkartenkörper 100 gemäß Figuren 3 und 4 und dem in der Kavität 20 der metallischen Kernschicht 15 sowie in der durchgängigen Chipmodulöffnung 75 der oberen Deckschicht 40 fixierten Chipmodul 90. Vor dem Fixieren des Chipmoduls 90 wird die in der Kavität 20 der metallischen Kernschicht 15 platzierte Einlage 45 oder das Füllmittel gemäß Figuren 3 und 4 entfernt.

Figur 8 zeigt eine Querschnittsansicht einer kontaktlosen oder Dual-Interface Chipkarte 350 mit der metallischen Kernschicht 15 gemäß Figur 1C und vier mit der metallischen Kernschicht 15 laminierten Deckschichten 40 gemäß Figur 2. Die Chipkarte 350 gemäß Figur 8 unterscheidet sich von der Chipkarte 250 gemäß Figur 7 dadurch, dass sich oberhalb und unterhalb der metallischen Kernschicht 15 gemäß Figur 8 jeweils zwei Deckschichten 40 befinden. Beispielsweise können die äußeren Deckschichten 40 transparente Schichten mit einem Magnetstreifen und/ oder einem Signatur-Feld und/oder einem Hologramm sein und die mittleren Deckschichten 40 können Schichten gedruckte Muster oder andere Muster aufweisen. Es können aber auch Deckschichten aus anderen Materialien wie z.B. Keramik oder Holz verwendet werden.

## Patentansprüche

1. Verfahren zum Herstellen eines Chipkartenkörpers mit einer metallischen Kernschicht (15) für eine kontaktlose oder Dual-Interface Chipkarte (150, 250, 350), umfassend die Schritte:
- Bereitstellen eines metallischen Mehrnutzenbogens (10) für eine Vielzahl von metallischen Kernschichten (15);
- Erzeugen einer entsprechenden Vielzahl von Kavitäten (20) zum Fixieren einer entsprechenden Vielzahl von Chipmodulen (90);
- Heraustrennen der Vielzahl von metallischen Kernschichten (15) aus dem bereitgestellten metallischen Mehrnutzenbogen (10); und später
- Erzeugen mindestens eines Schlitzes (25) in einer der Vielzahl der aus dem metallischen Mehrnutzenbogen (10) herausgetrennten metallischen Kernschichten (15).

2. Verfahren nach Anspruch 1, wobei der Schritt des Erzeugens der entsprechenden Vielzahl von Kavitäten (20) vor oder gleichzeitig mit dem Schritt des Heraustrennens durchgeführt wird.

3. Verfahren nach Anspruch 1 oder 2, wobei beim Erzeugen der entsprechenden Vielzahl von Kavitäten (20) die Kavitäten (20) ausgestanzt werden.

4. Verfahren nach Anspruch 1 oder 2, wobei beim Schritt des Erzeugens der entsprechenden Vielzahl von Kavitäten (20) die Kavitäten (20) mittels eines Lasers geschnitten werden.

5. Verfahren nach einem der Ansprüche 1 bis 4, wobei beim Schritt des Heraustrennens die Vielzahl von metallischen Kernschichten (15) aus dem metallischen Mehrnutzenbogen (10) ausgestanzt wird.

6. Verfahren nach einem der Ansprüche 1 bis 4, wobei beim Schritt des Heraustrennens die Vielzahl von metallischen Kernschichten (15) mittels eines Lasers aus dem metallischen Mehrnutzenbogen (10) herausgeschnitten wird.

7. Verfahren nach einem der Ansprüche 1 bis 6, wobei beim Schritt des Erzeugens des mindestens einen Schlitzes (25) der mindestens eine Schlitz (25) mittels eines Lasers geschnitten wird.

8. Verfahren nach einem der Ansprüche 1 bis 6, wobei beim Schritt des Erzeugens des mindestens einen Schlitzes (25) der mindestens eine Schlitz (25) chemisch geätzt wird.

9. Verfahren nach einem der Ansprüche 1 bis 8, wobei beim Schritt des Erzeugens des mindestens einen Schlitzes (25) der mindestens eine Schlitz (25) so erzeugt wird, dass er sich von der Kavität (20) bis zu einem Rand (16, 17, 18, 19) der aus dem metallischen Mehrnutzenbogen (10) herausgetrennten metallischen Kernschicht (15) erstreckt.

10. Verfahren nach einem der Ansprüche 1 bis 9, wobei beim Schritt des Erzeugens des mindestens einen Schlitzes (25) der mindestens eine Schlitz (25) so erzeugt wird, dass er eine Breite zwischen 30 µm und 100 µm aufweist.

11. Verfahren nach einem der Ansprüche 1 bis 10, umfassend die Schritte:
- Bereitstellen mindestens einer Deckschicht (40);
- Laminieren der mindestens einen Deckschicht (40) mit der herausgetrennten metallischen Kernschicht (15); und
- Erzeugen mindestens einer durchgängigen Chipmodulöffnung (75) in der mindestens einen Deckschicht (40) zum Fixieren des Chipmoduls (90) vor oder nach dem Schritt des Laminierens.

12. Verfahren nach Anspruch 11, wobei beim Schritt des Bereitstellens der mindestens einen Deckschicht (40) die mindestens eine Deckschicht (40) aus einem Mehrnutzenbogen (35) für eine Vielzahl von Deckschichten (40) herausgetrennt wird.

13. Verfahren nach Anspruch 12, umfassend den Schritt:
- Prelaminieren des bereitgestellten Mehrnutzenbogens (35) für die Vielzahl von Deckschichten (40).

14. Verfahren zum Herstellen einer kontaktlosen oder Dual-Interface Chipkarte (150) unter Verwendung des Verfahrens zum Herstellen des Chipkartenkörpers (15) nach einem der Ansprüche 1 bis 10, umfassend die Schritte:
- Bereitstellen eines Chipmoduls (90) mit einem Chip und einer mit dem Chip gekoppelten Antennenspule; und
- Fixieren des bereitgestellten Chipmoduls (90) in der Kavität (20) der herausgetrennten metallischen Kernschicht (15).

15. Verfahren zum Herstellen einer kontaktlosen oder Dual-Interface Chipkarte (250, 350) unter Verwendung des Verfahrens zum Herstellen des Chipkartenkörpers nach einem der Ansprüche 11 bis 13, umfassend die Schritte:
- Bereitstellen eines Chipmoduls (90) mit einem Chip und einer mit dem Chip gekoppelten Antennenspule; und
- Fixieren des bereitgestellten Chipmoduls (90) in der mindestens einen durchgängigen Chipmodulöffnung (75) der mindestens einen Deckschicht (40) und in der Kavität (20) der herausgetrennten metallischen Kernschicht (15).

## Claims

1. Method for producing a chip card body having a metallic core layer (15) for a contactless or dual-interface chip card (150, 250, 350), comprising the steps:
- providing a metallic multiple-repeat sheet (10) for a multiplicity of metallic core layers (15);
- generating a corresponding number of cavities (20) for fixing a corresponding number of chip modules (90);
- detaching the multiplicity of metallic core layers (15) from the provided metallic multiple-repeat sheet (10); and later
- generating at least one slot (25) in one of the multiplicity of metallic core layers (15) detached from the metallic multiple-repeat sheet (10).

2. Method according to Claim 1, wherein the step of generating the corresponding multiplicity of cavities (20) is carried out before or simultaneously with the step of detaching.

3. Method according to Claim 1 or 2, wherein the cavities (20) are punched out when generating the corresponding multiplicity of cavities (20).

4. Method according to Claim 1 or 2, wherein in the step of generating the corresponding plurality of cavities (20), the cavities (20) are cut by means of a laser.

5. Method according to one of Claims 1 to 4, wherein in the step of detaching, the multiplicity of metallic core layers (15) are punched out of the metallic multiple-repeat sheet (10).

6. Method according to one of Claims 1 to 4, wherein in the step of detaching, the multiplicity of metallic core layers (15) are cut out of the metallic multiple-repeat sheet (10) by means of a laser.

7. Method according to one of Claims 1 to 6, wherein in the step of generating the at least one slot (25), the at least one slot (25) is cut by means of a laser.

8. Method according to one of Claims 1 to 6, wherein in the step of generating the at least one slot (25), the at least one slot (25) is chemically etched.

9. Method according to one of Claims 1 to 8, wherein in the step of generating the at least one slot (25), the at least one slot (25) is generated in such a way that the latter extends from the cavity (20) up to a periphery (16, 17, 18, 19) of the metallic core layer (15) detached from the metallic multiple-repeat sheet (10).

10. Method according to one of Claims 1 to 9, wherein in the step of generating the at least one slot (25), the at least one slot (25) is generated in such a way that the latter has a width between 30 µm and 100 µm.

11. Method according to one of Claims 1 to 10, furthermore comprising the steps of:
- providing at least one cover layer (40);
- laminating the at least one covering layer (40) with the detached metallic core layer (15); and
- generating at least one continuous chip module opening (75) in the at least one cover layer (40) for fixing the chip module (90) before or after the step of laminating.

12. Method according to Claim 11, wherein in the step of providing the at least one cover layer (40), the at least one cover layer (40) is detached from a multiple-repeat sheet (35) for a multiplicity of cover layers (40).

13. Method according to Claim 12, comprising the step:
- pre-laminating the provided multiple-repeat sheet (35) for the multiplicity of cover layers (40).

14. Method for producing a contactless or dual-interface chip card (150) using the method for producing the chip card body (15) according to one of Claims 1 to 10, comprising the steps:
- providing a chip module (90) with a chip and an antenna coil coupled to the chip; and
- fixing the provided chip module (90) in the cavity (20) of the detached metallic core layer (15).

15. Method for producing a contactless or dual-interface chip card (250, 350) using the method for producing the chip card body according to one of Claims 11 to 13, comprising the steps:
- providing a chip module (90) with a chip and an antenna coil coupled to the chip; and
- fixing the provided chip module (90) in the at least one continuous chip module opening (75) of at least one cover layer (40) and in the cavity (20) of the detached metal core layer (15).

## Revendications

1. Procédé de fabrication d'un corps de carte à puce avec une couche centrale métallique (15) pour une carte à puce sans contact ou à double interface (150, 250, 350), comprenant les étapes suivantes :
- se mettre à disposition une feuille métallique multi-utilisation (10) pour une pluralité de couches centrales métalliques (15) ;
- créer une pluralité appropriée de cavités (20) pour fixer une pluralité correspondante de modules à puces (90) ;
- séparer la pluralité de couches centrales métalliques (15) de la feuille métallique multi-utilisation (10) mise à disposition ; et ensuite
- créer au moins une fente (25) dans une couche de la pluralité des couches centrales métalliques (15) séparées de la feuille métallique multi-utilisation (10).

2. Procédé selon la revendication 1, dans lequel l'étape de la création de la pluralité appropriée de cavités (20) est mise en œuvre avant l'étape de la séparation ou en même temps que celle-ci.

3. Procédé selon la revendication 1 ou la revendication 2, dans lequel les cavités (20) sont formées par poinçonnage lors de la création de la pluralité appropriée de cavités (20).

4. Procédé selon la revendication 1 ou la revendication 2, dans lequel, à l'étape de la création de la pluralité appropriée de cavités (20), les cavités (20) sont découpées au moyen d'un laser.

5. Procédé selon l'une des revendications 1 à 4, dans lequel, à l'étape de la séparation, la pluralité de couches centrales métalliques (15) est formée par découpe à l'emporte-pièce dans la feuille métallique multi-utilisation (10).

6. Procédé selon l'une des revendications 1 à 4, dans lequel, à l'étape de la séparation, la pluralité de couches centrales métalliques (15) est découpée de la feuille métallique multi-utilisation (10) au moyen d'un laser.

7. Procédé selon l'une des revendications 1 à 6, dans lequel, à l'étape de la création de ladite au moins une fente (25), ladite au moins une fente (25) est découpée au moyen d'un laser.

8. Procédé selon l'une des revendications 1 à 6, dans lequel, à l'étape de la création de ladite au moins une fente (25), ladite au moins une fente (25) est gravée chimiquement.

9. Procédé selon l'une des revendications 1 à 8, dans lequel, à l'étape de la création de ladite au moins une fente (25), ladite au moins une fente (25) est créée de manière à s'étendre depuis la cavité (20) jusqu'à un bord (16, 17, 18, 19) de la couche centrale métallique (15) séparée de la feuille métallique multi-utilisation (10).

10. Procédé selon l'une des revendications 1 à 9, dans lequel, lors de l'étape de la création de ladite au moins une fente (25), ladite au moins une fente (25) est créée de manière à avoir une largeur comprise entre 30 µm et 100 µm.

11. Procédé selon l'une des revendications 1 à 10, comprenant les étapes suivantes :
- se mettre à disposition au moins une couche de recouvrement (40) ;
- stratifier ladite au moins une couche de recouvrement (40) avec la couche centrale métallique (15) séparée ; et
- créer au moins une ouverture traversante (75) pour le module à puce dans ladite au moins une couche de recouvrement (40) afin de fixer le module à puce (90) avant ou après l'étape de stratification.

12. Procédé selon la revendication 11, dans lequel, à l'étape de mise à disposition de ladite au moins une couche de recouvrement (40), ladite au moins une couche de recouvrement (40) est séparée d'une feuille multi-utilisation (35) pour une pluralité de couches de recouvrement (40).

13. Procédé selon la revendication 12, comprenant l'étape suivante :
- pré-stratifier la feuille multi-utilisation (35) mise à disposition, pour la pluralité de couches de recouvrement (40).

14. Procédé de fabrication d'une carte à puce sans contact ou à double interface (150) par l'utilisation du procédé de fabrication du corps de carte à puce (15) selon l'une des revendications 1 à 10, comprenant les étapes suivantes :
- se mettre à disposition un module à puce (90) comprenant une puce et une bobine d'antenne reliée à la puce ; et
- fixer dans la cavité (20) de la couche centrale métallique (15) séparée le module à puce (90) mis à disposition.

15. Procédé de fabrication d'une carte à puce sans contact ou à double interface (250, 350) par l'utilisation du procédé de fabrication du corps de carte à puce selon l'une des revendications 11 à 13, comprenant les étapes suivantes :
- se mettre à disposition un module à puce (90) comprenant une puce et une bobine d'antenne reliée à la puce ; et
- fixer le module à puce (90) mis à disposition dans ladite au moins une ouverture traversante (75) de module à puce de ladite au moins une couche de recouvrement (40) et dans la cavité (20) de la couche centrale métallique (15) séparée.
